# FASCICULE DE BREVET EUROPEEN

(11) **EP 4 146 509 B1**
(45) Date de publication et mention de la délivrance du brevet: **17.07.2024**
(21) Numéro de dépôt: 21722893.1
(22) Date de dépôt: 04.05.2021
(51) Int. Cl.: B60T 13/74, B60T 17/22, H01F 7/16, F16D 127/06, H01F 7/18

(54) **ACTIONNEUR ÉLECTROMAGNÉTIQUE À COMMANDE MANUELLE ET VALVE DE FREIN DE STATIONNEMENT ÉQUIPÉE D'UN TEL ACTIONNEUR**
MANUELL BETÄTIGTER ELEKTROMAGNETISCHER AKTUATOR UND MIT EINEM SOLCHEN AKTUATOR AUSGESTATTETES PARKBREMSVENTIL
MANUALLY OPERATED ELECTROMAGNETIC ACTUATOR AND PARKING BRAKE VALVE EQUIPPED WITH SUCH AN ACTUATOR

(30) Priorité: 05.05.2020 FR 2004471
(43) Date de publication de la demande: 15.03.2023
(73) Titulaire: Safran Landing Systems, 78140 Vélizy-Villacoublay (FR)
(72) Inventeur: MONSAINT, Laurent, 77550 MOISSY-CRAMAYEL (FR)
(74) Mandataire: Cabinet Boettcher
(86) Numéro de dépôt international: PCT/EP2021/061702
(87) Numéro de publication internationale: WO 2021/224241

(56) Documents cités:
- DE-A1- 102010 000 737
- US-A- 5 365 210

## Description

L'invention concerne le domaine des actionneurs électromagnétiques et plus particulièrement un actionneur électromagnétique bistable à commande manuelle, ainsi qu'une valve de frein de parking d'aéronef comprenant un tel actionneur. Des exemples d'actionneurs sont connus des documents DE 10 2010 000737 et US 5 365 210.

### ARRIERE PLAN DE L'INVENTION

D'une manière générale, un frein de roue d'aéronef comporte des éléments de friction solidaires pour certains de la roue et pour d'autres d'un stator, et un vérin de frein agencé pour exercer sur les éléments de friction un effort suffisant pour bloquer en rotation la roue d'aéronef.

Au parking, le vérin de frein est activé par un dispositif de commande dédié (appelé ici système de frein de parking) et distinct du dispositif de commande du vérin de frein en phase d'atterrissage. Le système de frein de parking comporte un distributeur hydraulique communément appelé PBSELV (de l'anglais « Park Brake Selector Valve ») ou PBSOV (de l'anglais « Park Brake Shut-off Valve »), dont un tiroir ou un clapet est généralement déplacé par un actionneur électromécanique.

L'actionneur électromécanique comprend un moteur électrique avec un stator et un rotor, et un ensemble vis/écrou dont l'un des éléments est entraîné en rotation par le rotor et l'autre élément est astreint à coulisser sans rotation entre deux positions pour commander le déplacement du tiroir ou du clapet.

L'engrenage formé par l'ensemble vis/écrou est réputé irréversible de sorte que ce type d'actionneur ne permet pas de commander manuellement le déplacement dudit tiroir ou dudit clapet. Or, pour des raisons de maintenance, il serait intéressant de pouvoir commander le distributeur PBSELV / PBSOV en l'absence d'électricité.

Il serait par ailleurs intéressant de pouvoir commander manuellement le frein de parking en cas de panne électrique ou de dysfonctionnement électronique.

### OBJET DE L'INVENTION

L'invention a donc pour objet de proposer un actionneur linéaire commandable à la fois électriquement et manuellement pour piloter un distributeur tel que celui d'un système de frein de parking d'aéronef.

### RESUME DE L'INVENTION

A cet effet, on prévoit, selon l'invention, un actionneur électromagnétique bistable comprenant :
- une carcasse s'étendant suivant un axe d'effort de l'actionneur,
- deux bobines d'excitation disposées à l'intérieur de la carcasse et comportant au moins un enroulement autour de l'axe d'effort pour générer un flux magnétique de commande,
- un noyau mobile suivant l'axe d'effort et apte à être immobilisé selon deux positions extrêmes en fonction du flux magnétique généré par les bobines,
- un organe d'actionnement couplé au noyau pour former un ensemble mobile, et
- un dispositif de commande manuelle comportant un arbre d'entraînement mobile en rotation autour d'un premier axe orthogonal à l'axe d'effort, l'arbre d'entraînement comportant au moins une dent coopérant avec au moins un premier relief lié en translation à l'organe d'actionnement de sorte qu'une rotation de l'arbre d'entraînement engendre une translation de l'ensemble mobile.

L'engrenage formé entre l'ensemble mobile et l'arbre d'entraînement est réversible. L'organe d'actionnement peut ainsi être déplacé par une excitation de la bobine ou une rotation de l'arbre d'entraînement de sorte que l'actionneur est commandable à la fois électriquement et manuellement.

De manière particulière, l'organe d'actionnement comprend une tige s'étendant suivant l'axe d'effort.

Selon une caractéristique particulière, le dispositif de commande manuelle comprend une manette agencée à une extrémité de l'arbre d'entraînement pour entraîner en rotation ledit arbre d'entraînement.

Selon une autre caractéristique particulière, l'actionneur comprend en outre un arbre de recopie monté mobile en rotation autour d'un deuxième axe orthogonal à l'axe d'effort. L'arbre de recopie comporte une dent coopérant avec ledit au moins un premier relief ou avec au moins un deuxième relief de l'organe d'actionnement de sorte qu'une translation de l'organe de l'ensemble mobile entraîne une rotation de l'arbre de recopie.

De manière particulière alors, l'actionneur comporte un aimant permanent porté par l'arbre de recopie, et un capteur à effet Hall agencé pour détecter un champ magnétique émis par l'aimant lorsque l'arbre de recopie est dans une position angulaire correspondant à l'une des positions extrêmes du noyau.

L'invention concerne également une valve de frein de parking d'aéronef comprenant un tel actionneur et un élément de distribution mobile entre deux positions de service. L'organe d'actionnement est relié à l'élément de distribution pour commander un déplacement dudit élément de distribution entre deux positions de service.

De manière particulière, l'élément de distribution est un clapet ou un tiroir.

### BREVE DESCRIPTION DES DESSINS

L'invention sera mieux comprise à la lumière de la description qui suit, laquelle est purement illustrative et non limitative, et doit être lue en regard des dessins annexés, parmi lesquels :
- la figure 1 est une vue en perspective d'une valve de frein de parking d'aéronef comprenant un actionneur selon un mode de réalisation particulier de l'invention ;
- la figure 2 est une vue en coupe de la valve illustrée à la figure 1 selon un plan passant par un axe d'effort de l'actionneur ;
- la figure 3 est une vue en coupe simplifiée de l'actionneur illustré à la figure 2, dans un de ses états stables ;
- la figure 4 est une vue identique à la figure 3, dans laquelle l'actionneur est dans l'autre de ses états stables.

### DESCRIPTION DETAILLEE DE L'INVENTION

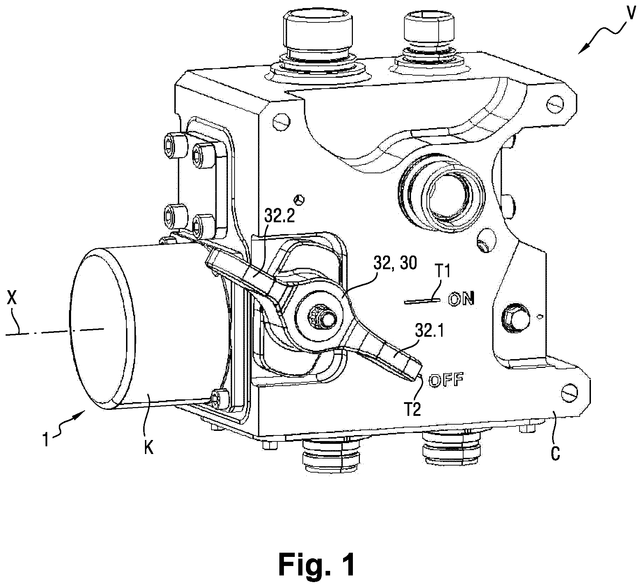

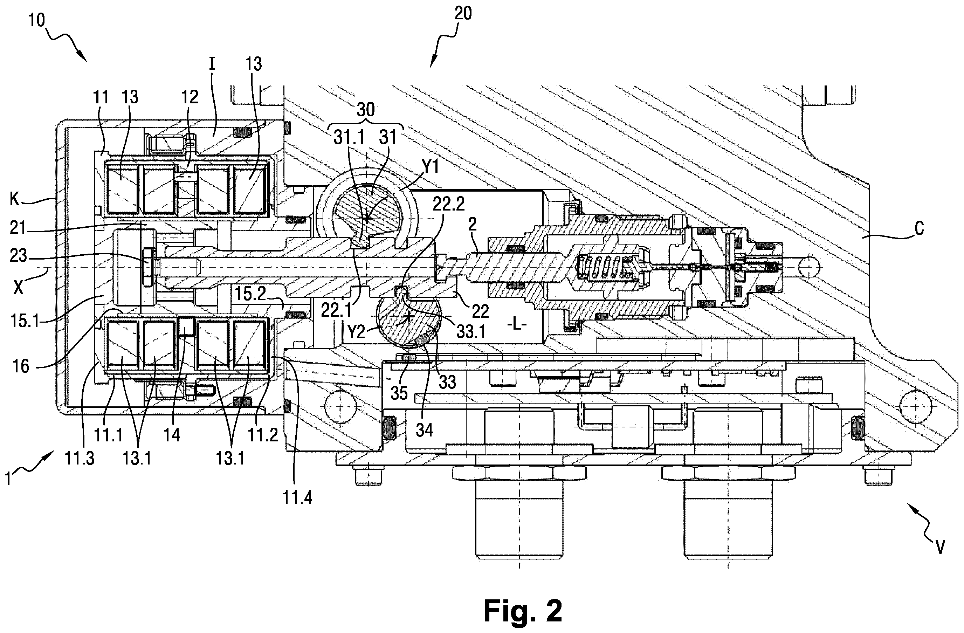

En référence aux figures 1 et 2, l'invention concerne un actionneur électromagnétique bistable, généralement désigné en 1, commandant ici le déplacement d'un élément de distribution 2 d'une valve V de frein de parking d'aéronef entre deux positions de service.

L'actionneur 1 comprend, selon un mode de réalisation particulier de l'invention, un ensemble fixe désigné de façon générale par la référence 10, ainsi qu'un ensemble mobile désigné de façon générale par la référence 20.

L'ensemble fixe 10 a une forme globalement cylindrique autour d'un axe X longitudinal et comprend, en allant de l'extérieur vers l'intérieur, une carcasse 11, un support 12 d'aimants permanents, deux bobines 13 d'excitation électromagnétiques, un ensemble de quatre aimants permanents 14, deux embouts 15.1, 15.2 magnétiques et un tube 16 en matériau non magnétique.

La carcasse 11 est réalisée en matériau ferromagnétique et comporte un corps tubulaire en deux parties 11.1, 11.2 s'étendant successivement suivant l'axe X. Chacune des parties 11.1, 11.2 de corps est pourvue à son extrémité libre d'un rebord 11.3, 11.4 perpendiculaire à l'axe X définissant chacun une ouverture d'extrémité de la carcasse 11.

Les deux bobines 13 sont chacune logées dans un volume interne du support 12 d'aimants permanents et sont portées par ledit support pour être centrées sur l'axe X. Chaque bobine 13 comprend deux enroulements 13.1 respectifs.

Le support 12 d'aimants permanents maintient les bobines 13 espacées l'une de l'autre et est prisonnier des parties de corps 11.1, 11.2. Le support d'aimants permanents 12 est réalisée en matériau ferromagnétique.

Les aimants permanents 14 sont symétriquement répartis autour de l'axe X entre les bobines 13 et sont collés à l'intérieur du support 12 pour générer un flux magnétique permanent en l'absence de courant dans lesdites bobines 13.

Les embouts 15.1, 15.2 magnétiques sont coaxiaux par rapport à l'axe X et sont positionnés dans la carcasse 11 au contact des bobines voisines des extrémités longitudinales de ladite carcasse 11. L'embout 15.1 obture l'ouverture d'extrémité définie par le rebord 11.3. L'embout 15.2 comprend une partie s'étendant en saillie de l'ouverture d'extrémité définie par le rebord 11.4. Chaque embout 15.1, 15.2 présente une forme tubulaire centrée sur l'axe X et forme une butée au coulissement de l'ensemble mobile 20. Les embouts 15.1, 15.2 sont réalisés en matériau ferromagnétique afin de guider le flux magnétique produit par les bobines 13 et guidé par la carcasse 11 et le support 12 d'aimants permanents.

Le tube 16 est centré sur l'axe X et s'étend entre les embouts 15.1, 15.2 à l'intérieur du support 12 d'aimants permanents pour former un organe de guidage de l'ensemble mobile 20.

L'ensemble mobile 20 comprend un noyau 21 réalisé en matériau ferromagnétique et une tige 22 non magnétique couplée au noyau 21 pour former un organe d'actionnement.

Le noyau 21 comprend un anneau périphérique à l'intérieur duquel s'étend radialement un voile de liaison avec la tige 22. Le noyau 21 est apte à coulisser suivant l'axe X à l'intérieur du tube 16 entre deux positions extrêmes dans lesquelles ledit noyau 21 est partiellement en regard des bobines 13 et est en appui contre l'un des embouts 15.1, 15.2. Les embouts 15.1, 15.2 forment ainsi des butées et permettent également de refermer le flux magnétique des bobines 13 vers le noyau 21.

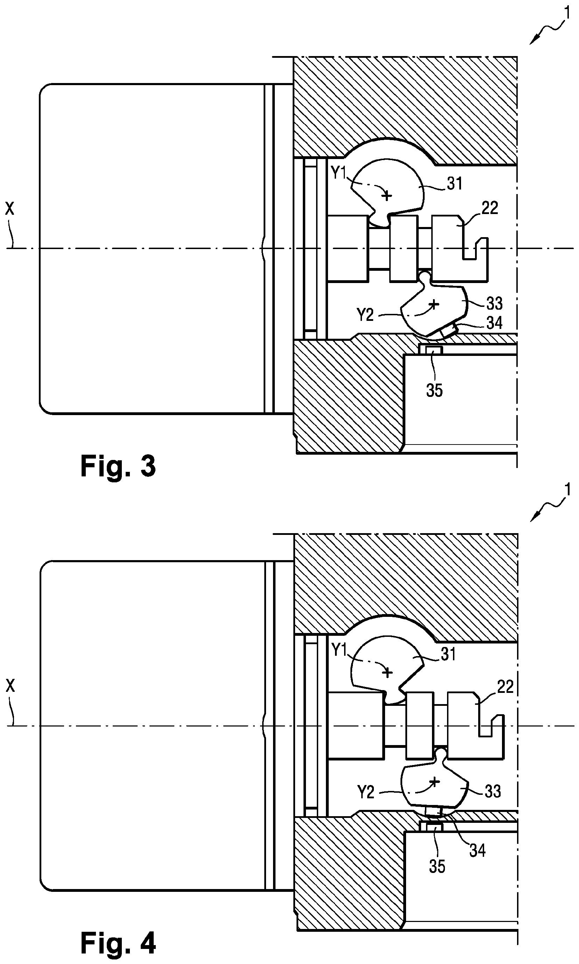

La tige 22 présente une forme globalement cylindrique suivant l'axe X. Une extrémité proximale de la tige est fixée solidairement au voile du noyau 21 par une vis 23 traversant ledit voile en son centre. La tige 22 est ainsi mobile suivant l'axe X entre une position rétractée (figure 3) et une position sortie (figure 4) correspondants aux positions extrêmes du noyau 21.

La tige 22 traverse axialement une ouverture pratiquée dans l'embout 15.2 de sorte qu'une extrémité distale de la tige 22 s'étend en saillie de l'ensemble fixe 10. L'extrémité distale de la tige 22 comporte une interface de liaison pour être couplée à l'élément de distribution 2, et est extérieurement pourvue d'une première gorge 22.1 et une deuxième gorge 22.2 annulaires.

L'ensemble fixe 10 de l'actionneur est fixé solidairement à un carter C de la valve V, via une interface de fixation I réalisée en matériau non magnétique dans laquelle la carcasse 11 est logée, de sorte que l'extrémité proximale de la tige 22 s'étende à l'intérieur d'un volume L de réception délimité par des parois internes du carter C. L'ensemble fixe 10 s'étend en partie en saillie de l'interface de fixation, qui est elle-même partiellement en saillie du carter C, et est coiffé par un capot K qui est fixé à l'interface de fixation en s'étendant en saillie du carter C.

L'actionneur 1 comprend également un dispositif de commande manuelle 30 pour déplacer manuellement la tige 22 entre la position rétractée et la position sortie. Le dispositif de commande comporte un arbre d'entraînement 31 mobile en rotation autour d'un axe Y1 orthogonal à l'axe X. L'arbre d'entraînement 31 traverse une paroi latérale du carter C et possède une extrémité en saillie à l'extérieur du carter C. L'extrémité de l'arbre d'entraînement 31 est pourvue d'une manette 32 (visible sur la figure 1) pour entraîner en rotation l'arbre d'entraînement 31. La manette 32, ici de forme couramment nommée « papillon », comprend deux oreilles 32.1, 32.2 identiques qui s'étendent symétriquement de part et d'autre de l'axe Y1 et dans un plan passant par ledit axe Y1. Les oreilles 32.1, 32.2 forment des moyens de préhension pour entraîner en rotation l'arbre d'entraînement 31.

Comme cela est visible sur la figure 2, l'arbre d'entraînement 31 comprend une dent 31.1 engagée dans la première gorge 22.1 de la tige 22 de sorte qu'une rotation de l'arbre d'entraînement 31 autour de l'axe Y1 entraîne un coulissement de la tige 22 suivant l'axe X vers la position sortie ou la position rétractée en fonction du sens de la rotation dudit arbre d'entraînement 31. Puisque la tige 22 est solidairement fixée au noyau 21, une rotation de l'arbre d'entraînement 31 provoque également un déplacement du noyau 21 vers l'une ou l'autre de ses positions extrêmes.

La dent 31.1 a une forme arrondie et s'inscrit, lorsque l'arbre d'entrainement 31 pivote, dans un cylindre centré sur l'axe Y1 et de diamètre égal à un diamètre extérieur de l'arbre d'entraînement 31.

La manette 32 a un débattement angulaire défini directement par la position rétractée et la position de la tige 22, et indirectement par les positions extrêmes du noyau 21. Comme illustré sur la figure 1, ce débattement angulaire est matérialisé par un premier trait T1 suivi de l'inscription « ON » et par un deuxième trait T2 suivi de l'inscription « OFF ». Le premier trait T1 correspond à une position angulaire extrême de la manette 32 dans laquelle l'oreille 32.1 est dans le prolongement dudit premier trait T1 et la tige 22 est dans la position sortie. Le deuxième trait T2 correspond à une position angulaire extrême de la manette 32 dans laquelle l'oreille 32.1 est dans le prolongement dudit deuxième trait T2 et la tige 22 est dans la position sortie. La manette 32 permet ainsi d'avoir une indication visuelle sur la position de la tige 22.

L'actionneur 1 comprend en outre un arbre de recopie 33 monté dans une paroi du carter C pour avoir une extrémité mobile en rotation à l'intérieur du volume L autour d'un axe Y2 orthogonal à l'axe X. Les axes Y1, Y2 sont parallèles. L'arbre de recopie 33 et l'arbre d'entraînement 31 s'étendent de part et d'autre de la tige 22.

L'extrémité de l'arbre de recopie 33 comporte une dent 33.1 engagée dans la deuxième gorge 22.2 de la tige 22 de sorte qu'un coulissement de la tige 22 selon l'axe X entraîne une rotation de l'arbre de recopie 33 autour de l'axe Y2. La dent 33.1 a une forme arrondie et s'inscrit, lors de la rotation de l'arbre de recopie 33, dans un cylindre centré sur l'axe Y2 et de diamètre égal à un diamètre extérieur de l'arbre de recopie 33.

Par ailleurs, un aimant 34 permanent est fixé sur une surface externe de l'arbre de recopie 33 qui est opposée à la dent 33.1, et un capteur 35 à effet Hall est agencé à l'intérieur du carter C de sorte que le capteur 35 détecte un champ magnétique émis par l'aimant 34 lorsque l'arbre de recopie 33 est dans une position angulaire correspondant à la position sortie de la tige 22. Le capteur 35 est relié à une unité électronique (non représentée ici) permettant, par exemple, de remonter au niveau du cockpit de l'aéronef une information relative à la position de la tige 22, et donc à un état de la valve V.

Le fonctionnement de l'actionneur va maintenant être décrit.

Pour déplacer le noyau 21 vers l'une ou l'autre de ses positions extrêmes, l'une des deux bobines 13 électromagnétiques est alimentée électriquement de manière à générer un champ magnétique d'attraction du noyau 21. L'autre bobine 13 électromagnétique n'est pas alimentée électriquement.

Le champ magnétique généré par la bobine 13 produit un flux magnétique qui est guidé par les parties ferromagnétiques de l'actionneur 1. Le flux magnétique forme une boucle et traverse successivement l'embout 15.1, 15.2 au contact de la bobine 13 alimentée électriquement, la partie 11.1, 11.2 de la carcasse 11 en contact avec ledit embout 15.1, 15.2, le support d'aimants permanents 12, les aimants permanents 14 et le noyau 21. Le noyau 21 se déplace alors à l'intérieur du tube 16 et est plaqué contre l'embout 15.1, 15.2 correspondant de l'ensemble fixe 10. Le noyau 21 se trouve alors écarté de l'autre embout 15.1, 15.2.

Le passage du noyau 21 vers l'une ou l'autre de ses positions extrêmes engendre un coulissement de la tige 22 vers la position rétractée ou la position sortie, et donc un déplacement de l'élément de distribution 2 de la valve V entre deux positions en service. Le coulissement de la tige 22 entraîne à son tour une rotation de l'arbre d'entraînement 31 et une rotation de l'arbre de recopie 33.

Lorsque que la tige 22 est dans la position sortie, la position angulaire de l'arbre de recopie 33 est telle que l'aimant 34 permanent est en regard du capteur 35. Le capteur 35 détecte alors le champ magnétique émis par l'aimant 34, ce qui permet à l'unité électronique d'informer le pilote de l'aéronef que la valve V est dans un état correspondant à la position sortie de la tige 22.

Lorsque que la tige 22 est dans sa position rétractée, la position angulaire de l'arbre de recopie 33 est telle que l'aimant 34 permanent n'est pas en regard du capteur 35. Le capteur 35 ne détecte alors pas le champ magnétique émis par l'aimant 34.

Il est aussi possible de commander manuellement le déplacement de l'élément de distribution 2 en tournant la manette 32 de façon à réaliser une rotation de l'arbre d'entraînement 31. La rotation de l'arbre d'entraînement 31 engendre un coulissement de la tige 22 vers la position sortie ou la position rétractée en fonction du sens de la rotation de la manette 32, ce qui entraîne un coulissement de l'élément de distribution 2 selon l'axe X vers l'une ou l'autre de ses positions de service.

Bien entendu, l'invention n'est pas limitée aux modes de réalisation décrits mais englobe toute variante entrant dans le champ de l'invention telle que définie par les revendications.

L'arbre d'entraînement 31 et l'arbre de recopie 33 ne s'étendent pas forcément parallèlement l'un par rapport l'autre.

Bien qu'ici l'arbre d'entrainement 31 et l'arbre de recopie 33 s'entendent de part et d'autre de la tige 22, ils peuvent aussi s'étendre du même côté de la tige 22.

La dent 31.1 de l'arbre d'entraînement 31 et la dent 33.1 de l'arbre de recopie 33 peuvent être engagées dans une seule et même gorge 22.1.

L'élément de distribution 2 peut par exemple être un clapet ou un tiroir.

La forme et les dimensions de la tige 22 peuvent être différentes de celle décrites et illustrées.

Chacune des gorges peut être remplacée par au moins un relief. On peut par exemple prévoir une crémaillère sur la tige 22 et des roues dentées sur l'arbre d'entraînement et l'arbre de recopie.

Chacune des gorges peut être ménagée sur l'organe d'actionnement, le noyau ou tout autre pièce liée en translation à l'organe d'actionnement.

L'arbre d'entraînement peut lui-même être pourvu d'un aimant pour faire office également d'arbre de recopie.

L'invention est utilisable pour tout type d'actionneur quel que soit le dispositif actionné.

## Revendications

1. Actionneur (1) électromagnétique bistable comprenant :
- une carcasse (11) s'étendant suivant un axe d'effort (X) de l'actionneur ;
- deux bobines (13) d'excitation disposées à l'intérieur de la carcasse et comportant chacune au moins un enroulement (13.1) autour de l'axe d'effort pour générer un flux magnétique de commande ;
- un noyau (21) mobile suivant l'axe d'effort et apte à être immobilisé selon deux positions extrêmes en fonction du flux magnétique généré par les bobines ;
- un organe d'actionnement (22) couplé au noyau pour former un ensemble mobile (20) ; et
- un dispositif de commande (30) manuelle,
l'actionneur étant **caractérisé en ce que** le dispositif de commande comporte un arbre d'entraînement (31) mobile en rotation autour d'un premier axe (Y1) orthogonal à l'axe d'effort, l'arbre d'entraînement comportant au moins une dent (31.1) coopérant avec au moins un premier relief (22.1) lié en translation à l'organe d'actionnement de sorte qu'une rotation de l'arbre d'entraînement engendre une translation de l'ensemble mobile.

2. Actionneur (1) selon la revendication 1, dans lequel l'organe d'actionnement comprend une tige s'étendant suivant l'axe d'effort.

3. Actionneur (1) selon l'une quelconque des revendications précédentes, dans lequel le dispositif de commande (30) comprend une manette (32) agencée à une extrémité de l'arbre d'entraînement (31) pour entraîner en rotation ledit arbre d'entraînement.

4. Actionneur (1) selon l'une quelconque des revendications précédentes, comprenant en outre un arbre de recopie (33) monté mobile en rotation autour d'un deuxième axe (Y2) orthogonal à l'axe d'effort (X), l'arbre de recopie comportant une dent (33.1) coopérant avec le au moins un premier relief (22.1) ou avec au moins un deuxième relief (22.2) de l'organe d'actionnement (22) de sorte qu'une translation de l'ensemble mobile entraîne une rotation de l'arbre de recopie.

5. Actionneur (1) selon la revendication 4, comprenant un aimant (34) permanent porté par l'arbre de recopie (33), et un capteur (35) à effet Hall agencé pour détecter un champ magnétique émis par l'aimant lorsque l'arbre de recopie est dans une position angulaire correspondant à l'une des positions extrêmes du noyau (21).

6. Valve (V) de frein de parking d'aéronef comprenant un actionneur (1) selon l'une quelconque des revendications précédentes et un élément de distribution mobile (2) entre deux positions de service, l'organe d'actionnement (22) étant relié à l'élément de distribution pour commander un déplacement dudit élément de distribution entre deux positions de service.

7. Valve (V) selon la revendication 6, dans laquelle l'élément de distribution (2) est un clapet ou un tiroir.

## Patentansprüche

1. Bistabiler elektromagnetischer Aktuator (1), umfassend:
ein Gehäuse (11), das sich entlang einer Kraftachse (X) des Aktuators erstreckt;
- zwei Anregungsspulen (13), die im Inneren des Gehäuses angeordnet sind und jeweils mindestens eine Wicklung (13.1) um die Kraftachse umfassen, um einen magnetischen Steuerfluss zu erzeugen;
- einen Kern (21), der entlang der Kraftachse beweglich und geeignet ist, in zwei Endposition in Abhängigkeit des von den Spulen erzeugten magnetischen Flusses immobilisiert zu werden;
- ein Betätigungsorgan (22), das mit dem Kern gekoppelt ist, um eine bewegliche Einheit (20) zu bilden; und
- eine manuelle Steuervorrichtung (30),
wobei der Aktuator **dadurch gekennzeichnet ist, dass** die Steuervorrichtung eine Antriebswelle (31) umfasst, die rotationsbeweglich um eine erste Achse (Y1) ist, die orthogonal zur Kraftachse ist, wobei die Antriebswelle mindestens einen Zahn (31.1) umfasst, der mit mindestens einem ersten Reliefelement (22.1) zusammenwirkt, das mit dem Betätigungsorgan derart in Translation verbunden ist, dass eine Drehung der Antriebswelle eine Translation der beweglichen Einheit erzeugt.

2. Aktuator (1) nach Anspruch 1, bei dem das Betätigungsorgan eine Stange umfasst, die sich entlang der Kraftachse erstreckt.

3. Aktuator (1) nach einem der vorhergehenden Ansprüche, bei dem die Steuervorrichtung (30) einen Hebel (32) umfasst, der an einem Ende der Antriebswelle (31) angeordnet ist, um die genannte Antriebswelle in Drehung anzutreiben.

4. Aktuator (1) nach einem der vorhergehenden Ansprüche, ferner umfassend eine Kopierwelle (33), die drehbeweglich um eine zweite Achse (Y2) gelagert ist, die orthogonal zur Kraftachse (X) ist, wobei die Kopierwelle einen Zahn (33.1) umfasst, der mit dem mindestens einen Reliefelement (22.1) oder mit mindestens einem zweiten Reliefelement (22.2) des Betätigungselements (22) derart zusammenwirkt, dass eine Translation der beweglichen Einheit eine Drehung der Kopierwelle zur Folge hat.

5. Aktuator (1) nach Anspruch 4, umfassend einen Dauermagneten (34), der von der Kopierwelle (33) getragen wird, und einen Hall-Effekt-Sensor (35), der ausgebildet ist, ein von dem Magneten emittiertes Magnetfeld zu erfassen, wenn die Kopierwelle in einer Winkelposition ist, die einer der Endpositionen des Kerns (21) entspricht.

6. Parkbremsventil (V) für ein Luftfahrzeug, umfassend einen Aktuator (1) nach einem der vorhergehenden Ansprüche und ein Verteilungselement (2), das zwischen zwei Betriebspositionen beweglich ist, wobei das Betätigungsorgan (22) mit dem Verteilungselement verbunden ist, um eine Verschiebung des Verteilungselements zwischen zwei Betriebspositionen zu steuern.

7. Ventil (V) nach Anspruch 6, bei dem das Verteilungselement (2) ein Klappenventil oder ein Schieber ist.

## Claims

1. Bistable electromagnetic actuator (1) comprising:
a housing (11) extending along an exertion axis (X) of the actuator;
two excitation coils (13) arranged inside the housing and each comprising at least one winding (13.1) around the exertion axis for generating a magnetic control flux;
a core (21) that can be moved along the exertion axis and immobilised in two end positions depending on the magnetic flux generated by the coils;
an actuating member (22) coupled to the core to form a movable assembly (20); and
a manual control device (30),
the actuator being **characterized in that** the control device comprises a drive shaft (31) mounted such that it can rotate about a first axis (Y1) orthogonal to the exertion axis, the drive shaft comprising at least one tooth (31.1) engaging with at least one first raised part (22.1) translationally connected to the actuating member such that rotation of the drive shaft generates translational movement of the movable assembly.

2. Actuator (1) according to claim 1, wherein the actuating member comprises a rod extending along the exertion axis.

3. Actuator (1) according to any one of the preceding claims, wherein the control device (30) comprises a handle (32) arranged at an end of the drive shaft (31) for rotating said drive shaft.

4. Actuator (1) according to any one of the preceding claims, further comprising a copy shaft (33) mounted such that it can rotate about a second axis (Y2) orthogonal to the exertion axis (X), the copy shaft comprising a tooth (33.1) engaging with the at least one first raised part (22.1) or with at least one second raised part (22.2) of the actuating member (22) such that a translational movement of the movable assembly rotates the copy shaft.

5. Actuator (1) according to claim 4, comprising a permanent magnet (34) carried by the copy shaft (33), and a Hall effect sensor (35) arranged for detecting a magnetic field emitted by the magnet when the copy shaft is in an angular position corresponding to one of the end positions of the core (21).

6. Aircraft parking brake valve (V) comprising an actuator (1) according to any one of the preceding claims, and a distribution element (2) that is movable between two service positions, the actuating member (22) being connected to the distribution element for controlling a movement of said distribution element between two service positions.

7. Valve (V) according to claim 6, wherein the distribution element (2) is a check valve or a slide valve.
